# EUROPEAN PATENT APPLICATION

(11) **EP 2 741 403 A2**
(43) Date of publication of application: **11.06.2014**
(21) Application number: 13195729.2
(22) Date of filing: 04.12.2013
(51) Int. Cl.: H02K 11/00, H02K 5/20

(54) **Motor and fan**

(30) Priority: 10.12.2012 JP 2012269011
(71) Applicant: Nidec Corporation, Kyoto-shi, Kyoto 601-8205 (JP)
(72) Inventor: Furutachi, Eiji, Minami-ku, Kyoto 601-8205 (JP)
(74) Representative: Zimmermann, Tankred Klaus

(57) **Abstract**

[Abstract] A motor that is used for a fan has a base section having a circuit board disposition portion, a circuit board disposed on the lower surface of the circuit board disposition portion, and a flow guide plate that is disposed above the circuit board disposition portion. Further, the motor has a first opening and a third opening making the inside of the motor and the outside of the motor communicate with each other. The flow guide plate has a flat plate portion axially overlapping at least a portion of the circuit board disposition portion. The flow guide plate has a second opening making a first space above the base section and below the flow guide plate and a second space above the flow guide plate communicate with each other. When an air current is created between the first opening and the third opening, an air current entering the first opening from the outside of the motor is guided by the flow guide plate and advances along the upper surface of the circuit board disposition portion of the base section. Heat generated from the circuit board is transferred from the lower surface to the upper surface of the circuit board disposition portion and dissipated by the air current. As a result, the heat generated from the circuit board can be efficiently dissipated.

## Description

### [Technical Field]

The present invention relates to a motor and a fan.

### [Background Art]

Conventionally, there is a motor having various electronic components for supply of a drive electric current. If the drive electric current is supplied in order to drive the motor, the electronic components generate heat. In a case where environmental temperature around a motor is high, a case where a motor is rotated at high speed, or the like, if cooling of an electronic component is insufficient, there is a case where the electronic component reaches a high temperature and thus does not normally operate. In particular, a motor for a fan is very frequently driven in a state where environmental temperature is high, or rotated at high speed.

A motor for a fan of the related art is described in, for example, EP1050682A. The motor of EP1050682A has a receptacle which accommodates an electronic circuit, at a radially extending portion of a stator body (Paragraph 0013).

### [Disclosure of the Invention]

In the motor described in EP1050682A, the stator body is made of metal and conducts heat generated in the electronic circuit (Paragraph 0014). Further, the stator body of the literature has radial cooling fins at the outer periphery of the receptacle. Then, an air current generated in the outside of the motor hits against the cooling fins. The heat generated from the electronic circuit is conducted to the stator body and dissipated from the cooling fins (Paragraph 0019).

However, in the motor described in the publication, since heat of the receptacle in which the electronic circuit is disposed is released through the cooling fins distanced in a radial direction from the receptacle, heat dissipation efficiency is insufficient.

An object of the present invention is to provide a motor in which heat generated from a circuit board can be efficiently dissipated by using an air current passing through the inside of the motor.

According to an exemplary first invention of this application, there is provided a motor that is used for a fan having an impeller cup and a blade extending outward in a radial direction from the impeller cup, including: a stationary section; and a rotating section that rotates around a vertically extending central axis along with the impeller cup, wherein the stationary section includes a base section that extends in the radial direction below the rotating section and has a circuit board disposition portion, an armature that is located above the base section, a circuit board that is disposed on the lower surface of the circuit board disposition portion and electrically connected to the armature, and a board cover that is disposed below the circuit board disposition portion and covers the circuit board, the rotating section includes a rotor that is disposed radially inside the armature and generates torque between itself and the armature, the stationary section or the rotating section has a flow guide plate having an annular shape and extending in the radial direction, at least a portion of the flow guide plate is located below the armature and the rotor, the flow guide plate has a flat plate portion axially overlapping at least a portion of the circuit board disposition portion, a first space is present above the base section and below the flow guide plate, a second space is present above the flow guide plate and further on the inside in the radial direction than an outer peripheral end of the flow guide plate, the base section has a first opening making the first space communicate with an external space below or radially outside the base section, a second opening that is formed by the flow guide plate and the stationary section makes the first space and the second space communicate with each other, and a third opening making the second space and the external space communicate with each other is provided in the upper surface of the stationary section or the rotating section or between the stationary section and the rotating section.

According to the exemplary first invention of this application, when an air current is created between the first opening and the third opening in the inside of the motor, the air current is guided by the flow guide plate and advances along the upper surface of the circuit board disposition portion of the base section. Heat generated from the circuit board is transferred from the lower surface to the upper surface of the circuit board disposition portion and dissipated by the air current. In this way, the heat generated from the circuit board can be efficiently dissipated. Further, as a portion where heat exchange with an air current is performed in this application, in addition to a heat dissipation fin of the related art, the circuit board disposition portion is also included, and therefore, a heat dissipation area increases. That is, heat generated from the circuit board can be efficiently dissipated by using an air current passing through the inside of the motor.

### [Brief Description of the Drawings]

Fig. 1 is a cross-sectional view of a motor according to a first embodiment.
Fig. 2 is a cross-sectional view of a motor according to a second embodiment.
Fig. 3 is a cross-sectional view of a fan according to a third embodiment.
Fig. 4 is a cross-sectional view of a fan according to the third embodiment.
Fig. 5 is a top perspective view of a base section according to the third embodiment.
Fig. 6 is a partial cross-sectional view of the motor according to the third embodiment.
Fig. 7 is a perspective view from the top side of a flow guide plate and the base section according to the third embodiment.
Fig. 8 is a perspective view from the bottom side of the flow guide plate and the base section according to the third embodiment.
Fig. 9 is a partial cross-sectional view of a motor according to a modified example.
Fig. 10 is a partial cross-sectional view of a motor according to a modified example.
Fig. 11 is a partial cross-sectional view of a motor according to a modified example.
Fig. 12 is a cross-sectional view of a motor according to a modified example.
Fig. 13 is a cross-sectional view of a motor according to a modified example.
Fig. 14 is a cross-sectional view of a motor according to a modified example.

### [Best Mode for Carrying Out the Invention]

Hereinafter, exemplary embodiments of the invention will be described with reference to the drawings. In addition, in this application, a direction parallel to the central axis of a motor is referred to as an "axial direction", a direction orthogonal to the central axis of the motor is referred to as a "radial direction", and a direction along an arc centered on the central axis of the motor is referred to as a "circumferential direction". Further, in this application, the shape or the positional relationship of each section will be described with the axial direction set to be a vertical direction and the rotor side with respect to a base section set to be the top. However, the definition of the vertical direction is not intended to limit a direction at the time of the use of a motor according to the invention.

Further, in this application, a "direction parallel to" also includes a direction substantially parallel to. Further, in this application, a "direction orthogonal to" also includes a direction substantially orthogonal to.

### <1. First Embodiment>

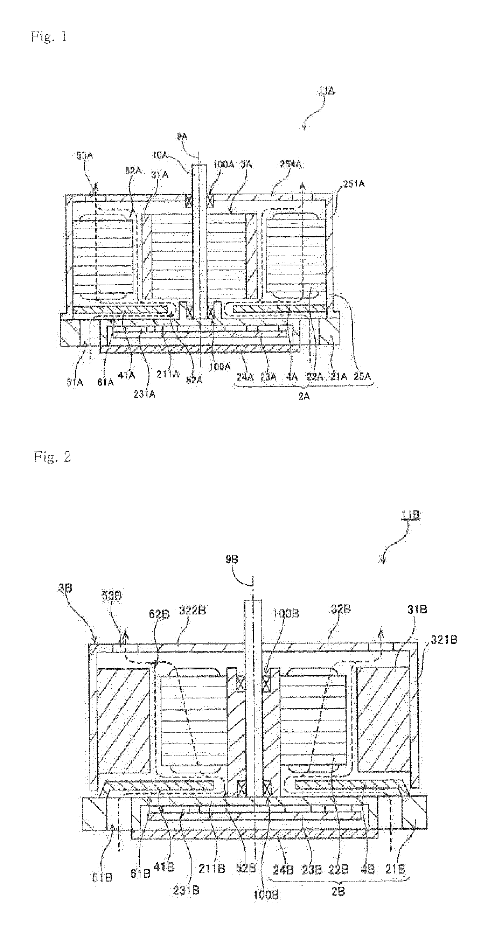

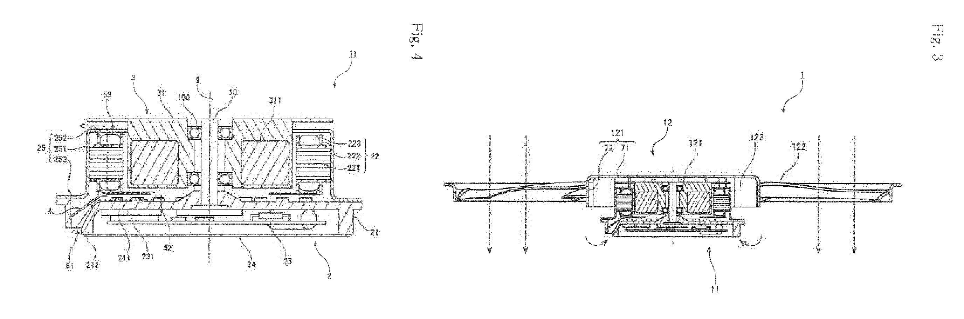

Fig. 1 is a vertical cross-sectional view of a motor 11A according to the first embodiment. The motor 11A is used for a fan having an impeller cup and blades extending outward in the radial direction from the impeller cup (refer to Fig. 3). The motor 11A according to this embodiment is a so-called inner rotor type motor in which a rotor 31A is disposed radially inside an armature 22A. As shown in Fig. 1, the motor 11A has a stationary section 2A and a rotating section 3A.

The stationary section 2A has a base section 21A, the armature 22A, a circuit board 23A, a board cover 24A, and a motor frame 25A. The base section 21A extends in the radial direction below the rotating section 3A. Further, the base section 21A has a circuit board disposition portion 211A. The armature 22A is located above the base section 21A.

The circuit board 23A is disposed on the lower surface of the circuit board disposition portion 211A and electrically connected to the armature 22A. An electronic component 231A for driving the motor is mounted on the circuit board 23A. The board cover 24A is disposed below the circuit board disposition portion 211A and covers the circuit board 23A. The motor frame 25A has a cylindrical portion 251A having a substantially cylindrical shape and an upper plate portion 254A closing an upper portion of the cylindrical portion 251A.

The rotating section 3A has a shaft 10A and the rotor 31A. The rotating section 3A rotates around a vertically extending central axis 9A along with the impeller cup while being supported on bearing mechanisms 100A. The rotor 31A is disposed radially inside the armature 22A. The shaft 10A is fixed to the impeller cup. The rotor 31A generates torque between itself and the armature 22A and is rotated around the central axis 9A by the torque.

The cylindrical portion 251A accommodates the armature 22A and the rotor 31A of the rotating section 3A inside thereof in the radial direction. In addition, the cylindrical portion 251A need not accommodate all of the armature 22A and the rotor 31A inside thereof in the radial direction. It is acceptable if the cylindrical portion 251A accommodates a portion of the stationary section 2A or a portion of the rotating section 3A inside thereof in the radial direction.

Further, the stationary section 2A has a flow guide plate 4A having a substantially annular shape and extending in the radial direction. In addition, although in this embodiment, the stationary section 2A has the flow guide plate 4A, the rotating section 3A may have the flow guide plate 4A. The flow guide plate 4A is located below the armature 22A and the rotor 31A.

The flow guide plate 4A has a flat plate portion 41A which axially overlaps a portion of the circuit board disposition portion 211A and extends substantially parallel to the upper surface of the base section 21A.

A first space 61A is present above the base section 21A and below the flow guide plate 4A. Further, a second space 62A is present above the flow guide plate 4A and further on the inside in the radial direction than an outer peripheral end of the flow guide plate 4A.

The base section 21A further has a first opening 51A radially outside the circuit board disposition portion 211A. The first opening 51A makes the first space 61A communicate with the external space below the base section 21A. In addition, the first opening 51A may be provided at a position to make the first space 61A communicate with the external space radially outside the base section 21A.

The flow guide plate 4A has a second opening 52A on the inside thereof in the radial direction. The second opening 52A makes the first space 61A and the second space 62A communicate with each other.

A third opening 53A is provided in the upper plate portion 254A of the motor frame 25A. The third opening 53A makes the second space 62A and the external space communicate with each other. In addition, the third opening 53A may be provided in the cylindrical portion 251A.

The motor 11A is driven, whereby the impeller cup fixed to the shaft 10A rotates, and thus the blades extending from the impeller cup create an air current around the motor 11A. In this way, an air current toward the third opening 53A from the first opening 51A is created in the motor 11A. The movement of the air current toward the third opening 53A from the first opening 51A is shown by a dashed line in Fig. 1. In addition, the direction of the air current may differ. For example, if the motor 11A is driven, an air current toward the first opening 51A from the third opening 53A may be created in the motor 11A.

An air current entering the first space 61A of the motor 11A from the first opening 51A advances inward in the radial direction along the lower surface of the flow guide plate 4A and reaches the second space 62A through the second opening 52A. Next, the air current advances outward in the radial direction along a lower end portion of the rotor 31A in the second space 62A. Then, the air current passes through a gap in the armature 22A in the circumferential direction or the gap between the armature 22A and the rotor 31A and heads for the third opening 53A. Subsequently, the air current is discharged from the third opening 53A to the outside of the motor.

As described above, in the motor 11A, the air current entering the motor 11A from the first opening 51A reaches the second opening 52A along the flow guide plate 4A. Further, the flat plate portion 41A of the flow guide plate 4A and the upper surface of the circuit board disposition portion 211A are substantially parallel to each other. That is, the air current entering the motor 11A from the first opening 51A heads for the second opening 52A along the upper surface of the circuit board disposition portion 211A.

Heat generated from the electronic component 231A is conducted from the lower surface to the upper surface of the circuit board disposition portion 211A. Then, the heat reaching the upper surface of the circuit board disposition portion 211A is efficiently dissipated by the air current along the upper surface of the circuit board disposition portion 211A. Further, in order to efficiently transfer the heat generated from the electronic component 231A to the circuit board disposition portion 211A, an insulating member having high thermal conductivity may be disposed between the electronic component 231A and the circuit board disposition portion 211A. As the insulating member having high thermal conductivity, for example, a heat conducting sheet or a silicone adhesive is considered. However, the insulating member is not limited thereto. That is, the upper surface of the electronic component 231A is in direct or indirect contact with the circuit board disposition portion 211A. On the other hand, the circuit board disposition portion 211A is located in the flow of the air current. As a result, the dissipation efficiency of the heat generated from the electronic component 231A becomes high.

### <2. Second Embodiment>

Fig. 2 is a vertical cross-sectional view of a motor 11B according to the second embodiment. The motor 11B is used for a fan having an impeller cup and blades extending outward in the radial direction from the impeller cup. The motor 11B according to this embodiment is a so-called outer rotor type motor in which a rotor 31B is disposed radially outside an armature 22B.

As shown in Fig. 2, the motor 11B has a stationary section 2B and a rotating section 3B.

The stationary section 2B has a base section 21B, the armature 22B, a circuit board 23B, and a board cover 24B. The base section 21B extends in the radial direction below the rotating section 3B. Further, the base section 21B has a circuit board disposition portion 211B. The armature 22B is located above the base section 21B. The circuit board 23B is disposed on the lower surface of the circuit board disposition portion 211B and electrically connected to the armature 22B. An electronic component 231B for driving the motor is mounted on the circuit board 23B. The board cover 24B is disposed below the circuit board disposition portion 211B and covers the circuit board 23B.

The rotating section 3B rotates around a vertically extending central axis 9B along with the impeller cup while being supported on bearing mechanisms 100B. The rotating section 3B has the rotor 31B and a rotor frame 32B. The rotor 31B is disposed radially outside the armature 22B. The rotor 31B generates torque between itself and the armature 22B and is rotated around the central axis 9B around the armature 22B by the torque. The rotor frame 32B has a cylindrical portion 321B having a substantially cylindrical shape and an upper plate portion 322B closing an upper portion of the cylindrical portion 321B. The cylindrical portion 321B accommodates the rotor 31B and the armature 22B inside thereof in the radial direction.

Further, the stationary section 2B has a flow guide plate 4B having a substantially annular shape and extending in the radial direction. In addition, although in this embodiment, the stationary section 2B has the flow guide plate 4B, the rotating section 3B may have the flow guide plate 4B. The flow guide plate 4B is located below the armature 22B and the rotor 31B.

The flow guide plate 4B has a flat plate portion 41B which axially overlaps a portion of the circuit board disposition portion 211B and extends substantially parallel to the upper surface of the base section 21B.

A first space 61B is present above the base section 21B and below the flow guide plate 4B. Further, a second space 62B is present above the flow guide plate 4B and further on the inside in the radial direction than an outer peripheral end of the flow guide plate 4B.

The base section 21B has a first opening 51B radially outside the circuit board disposition portion 211B. The first opening 51B makes the first space 61B communicate with the external space below the base section 21B. In addition, the first opening 51B may be provided at a position to make the first space 61B communicate with the external space further on the outside in the radial direction than the base section 21B.

The flow guide plate 4B has a second opening 52B on the inside thereof in the radial direction. The second opening 52B makes the first space 61B and the second space 62B communicate with each other.

A third opening 53B is provided in the upper plate portion 322B of the rotor frame 32B. The third opening 53B makes the second space 62B and the external space communicate with each other. In addition, the third opening 53B may be provided in the cylindrical portion 321B.

The motor 11B is driven, whereby the impeller cup fixed to the rotating section 3B rotates, and thus the blades extending from the impeller cup create an air current around the motor 11B. In this way, an air current toward the third opening 53B from the first opening 51B is created in the motor 11B. The movement of the air current toward the third opening 53B from the first opening 51B is shown by a dashed line in Fig. 2. In addition, the direction of the air current may differ. For example, if the motor 11B is driven, an air current toward the first opening 51B from the third opening 53B may be created in the motor 11B.

In the motor 11B, an air current entering the motor 11B from the first opening 51B advances inward in the radial direction along the flow guide plate 4B in the first space 61B and reaches the second opening 52B. Next, the air current reaching the second opening 52B passes through a gap in the armature 22B in the circumferential direction or the gap between the armature 22B and the rotor 31B and heads for the third opening 53B. Subsequently, the air current is discharged from the third opening 53B to the outside of the motor.

As described above, in the motor 11B, the air current entering the motor 11B from the first opening 51B reaches the second opening 52B along the flow guide plate 4B. Further, the flat plate portion 41B of the flow guide plate 4B and the upper surface of the circuit board disposition portion 211B are substantially parallel to each other. That is, the air current entering the motor 11B from the first opening 51B heads for the second opening 52B along the upper surface of the circuit board disposition portion 211B.

Heat generated from the electronic component 231B is conducted from the lower surface to the upper surface of the circuit board disposition portion 211B. Then, the heat reaching the upper surface of the circuit board disposition portion 211B is efficiently dissipated by the air current along the upper surface of the circuit board disposition portion 211B. Further, in order to efficiently transfer the heat generated from the electronic component 231B to the circuit board disposition portion 211B, an insulating member having high thermal conductivity may be disposed between the electronic component 231B and the circuit board disposition portion 211B. As the insulating member having high thermal conductivity, for example, a heat conducting sheet or a silicone adhesive is considered. However, the insulating member is not limited thereto. That is, the upper surface of the electronic component 231B is in direct or indirect contact with the circuit board disposition portion 211B. On the other hand, the circuit board disposition portion 211B is located in the flow of the air current. As a result, the dissipation efficiency of the heat generated from the electronic component 231B becomes high.

### <3. Third Embodiment>

### <3-1. Overall Configuration of Fan>

Next, the third embodiment of the invention will be described. Fig. 3 is a cross-sectional view of a fan 1 according to the third embodiment. The fan 1 is used for the cooling of, for example, an engine of an automobile. However, the fan 1 according to the invention may be used for those other than an automobile. For example, the fan 1 according to the invention may be mounted on office automation equipment, medical equipment, industrial large-scaled facilities, or the like to cool a portion thereof.

As shown in Fig. 3, the fan 1 has a motor 11 and an impeller 12. The motor 11 will be described later. The impeller 12 has an impeller cup 121, a plurality of outer blades 122, and an inner blade 123.

The impeller cup 121 has a connection portion 71 and a tubular portion 72. The connection portion 71 extends in a direction orthogonal to a central axis 9 above the motor 11. Further, the connection portion 71 and a rotating section 3 (described later) of the motor 11 are fixed to each other. In this way, if the motor 11 is driven, the impeller 12 rotates around the central axis 9 along with the rotating section 3 (described later). The tubular portion 72 extends downward from an end portion on the outside in the radial direction of the connection portion 71. A portion of the motor 11 is accommodated radially inside the tubular portion 72.

The outer blades 122 extend outward in the radial direction from the tubular portion 72 of the impeller cup 121. If the outer blades 122 rotate, the outer blades 122 create an air current toward the lower side from the upper side. In Fig. 3, the movement of the air current is shown by a dashed line. The axial air current created by the outer blades 122 or air on the lower surface side of the motor 11 enters the inside of the motor from an opening of the lower surface of the motor 11. Further, the inner blade 123 extends inward in the radial direction from the tubular portion 72 of the impeller cup 121. The detailed movement of the air current will be described later.

In addition, in this embodiment, the fan 1 is an axial-flow fan. However, the invention is not limited thereto. If the fan is a fan creating an air current around a motor, a centrifugal fan is also acceptable.

### <3-2. Overall Configuration of Motor>

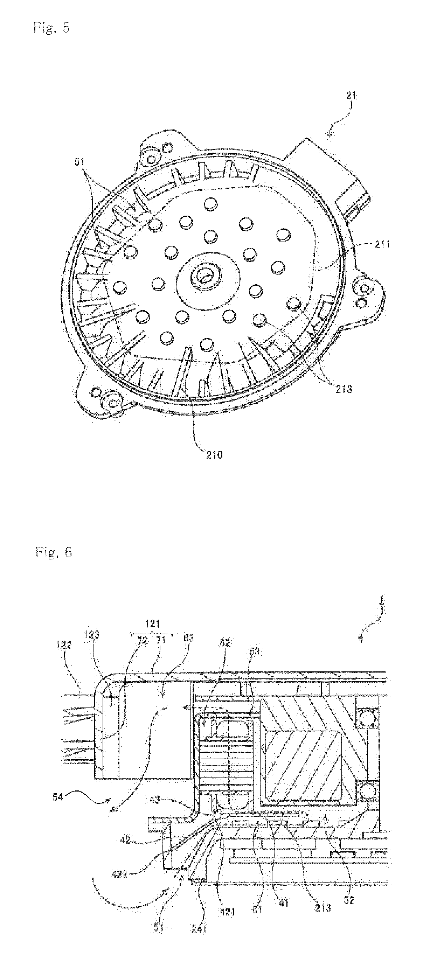

Subsequently, the overall configuration of the motor 11 will be described. Fig. 4 is a cross-sectional view of the motor 11. Fig. 5 is a top perspective view of a base section 21 of the motor 11. Fig. 6 is a partial cross-sectional view of the fan 1.

As shown in Fig. 4, the motor 11 has a stationary section 2 and the rotating section 3.

The stationary section 2 has a shaft 10, the base section 21, an armature 22, a circuit board 23, a board cover 24, a motor frame 25, and a flow guide plate 4.

The shaft 10 is a columnar member extending in the vertical direction along the central axis 9. A lower end portion of the shaft 10 is fixed to the base section 21.

The base section 21 extends in the radial direction below the rotating section 3. The base section 21 has a plurality of fins 210, a circuit board disposition portion 211, a wall portion 212, and a plurality of first openings 51. The circuit board disposition portion 211 extends in a substantially flat plate shape toward the outside in the radial direction from the periphery of a lower end portion of the shaft 10. The wall portion 212 extends downward in a substantially annular shape from an end portion on the outside in the radial direction of the circuit board disposition portion 211.

As shown in Fig. 5, the plurality of fins 210 extends outward in the radial direction from the circuit board disposition portion 211 and the wall portion 212.

Inner ends in the radial direction of the plurality of fins 210 may extend to the upper surface of the circuit board disposition portion 211. In this case, a portion of each of the fins 210 extends to the upper surface of the circuit board disposition portion 211. In this way, since a portion of each of the fins 210 is provided to protrude in the axial direction on the upper surface of the circuit board disposition portion 211, the surface area of the upper surface of the circuit board disposition portion 211 increases, and thus heat dissipation efficiency is improved. As shown in Figs. 4 and 5, each of the first openings 51 axially penetrates the base section 21 on the outsides in the radial direction of the circuit board disposition portion 211 and the wall portion 212. Further, the plurality of fins 210 and the plurality of first openings 51 are disposed side by side alternately in the circumferential direction.

The base section 21 is made of a metal material such as aluminum and has excellent thermal conductivity. For this reason, heat which is transferred from an electronic component 231 (described later) through direct or indirect contact with the circuit board disposition portion 211 can be efficiently dissipated from each portion of the base section 21. In addition, in this embodiment, the entirety of the base section 21 is made of a metal material. However, the invention is not limited thereto. In the motor according to the invention, the base section dissipates heat which is transferred thereto from the electronic component 231 from particularly the upper surface of the circuit board disposition portion. Therefore, it is preferable that at least the upper surface of the circuit board disposition portion be made of a metal material.

As shown in Figs. 5 and 6, the base section 21 in this embodiment further has a plurality of protrusion portions 213 on the upper surface of the circuit board disposition portion 211. Due to the protrusion portions 213, the surface area of the upper surface of the circuit board disposition portion 211 becomes wide. In this way, heat dissipation efficiency from the upper surface of the circuit board disposition portion 211 increases. In particular, by disposing the electronic component 231 at a portion of the lower surface corresponding to a portion where the protrusion portions 213 are installed on the upper surface of the circuit board disposition portion 211, heat generated from the electronic component 231 can be more efficiently dissipated.

As shown in Fig. 4, the armature 22 is located above the base section 21. The armature 22 has a core 221, an insulator 222, and a plurality of coils 223. The core 221 is made of a laminated steel plate in which magnetic steel sheets are laminated in the axial direction. The core 221 is fixed to the motor frame 25. The insulator 222 is formed of resin that is an insulating body. At least a portion of the outer surface of the core 221 is covered by the insulator 222. The coil 223 is formed of a conducting wire which is wound around the insulator 222.

The circuit board 23 is disposed on the lower surface of the circuit board disposition portion 211. The electronic component 231 for driving the motor 11 is mounted on the circuit board 23. Further, in a case where it is necessary to make a large electric current flow at the time of driving of the motor 11, the electronic component 231 and the circuit board 23 may be connected through a bus bar for electrical connection withstanding a high-voltage electric current. An end portion of the conducting wire configuring the coil 223 is soldered or welded to the circuit board 23 and electrically connected to the electronic component 231 on the circuit board 23. Further, an end portion of the conducting wire and the bus bar may be connected and the bus bar and the circuit board may be connected. An electric current which is supplied from an external power supply flows to the coil 223 through the circuit board 23.

Further, in order to efficiently transmit the heat generated from the electronic component 231 to the circuit board disposition portion 211, an insulating member having high thermal conductivity may be disposed between the electronic component 231 and the circuit board disposition portion 211. For example, a heat conducting sheet or a silicone adhesive may be disposed between the electronic component 231 and the circuit board disposition portion 211. That is, the upper surface of the electronic component 231 is in direct or indirect contact with the circuit board disposition portion 211. On the other hand, the circuit board disposition portion 211 is located in the flow of an air current, as will be described later. As a result, the dissipation efficiency of the heat generated from the electronic component 231 becomes high.

The board cover 24 is disposed below the circuit board disposition portion 211 and covers the circuit board 23. As shown in Fig. 6, a lower end portion of the wall portion 212 and an end portion on the outside in the radial direction of the board cover 24 are hermetically sealed through a seal material 241. That is, the motor 11 has the seal material 241 hermetically sealing the base section 21 and the end portion of the board cover 24. For example, a silicone adhesive or resin such as an elastomer can be used for the seal material 241. In this way, sticking of moisture, dust, or the like to the circuit board 23 from the lower side can be suppressed. On the other hand, the circuit board 23 is hermetically sealed, whereby it becomes difficult for the heat generated from the circuit board 23 to be discharged to the outside. Therefore, a heat dissipation technique according to the invention is particularly useful.

As shown in Fig. 4, the motor frame 25 has a cylindrical portion 251, an annular portion 252, and a flange portion 253. The cylindrical portion 251 has a substantially cylindrical shape and is disposed to be centered on the central axis 9. The cylindrical portion 251 accommodates the armature 22 and a portion of the rotating section 3 inside thereof in the radial direction. The annular portion 252 extends inward in the radial direction from an upper end portion of the cylindrical portion 251. Further, the flange portion 253 extends outward in the radial direction from a lower end portion of the cylindrical portion 251. The flange portion 253 and the base section 21 are fixed to each other by screw fastening.

The flow guide plate 4 is located below the armature 22 and a rotor 31. The details of the flow guide plate 4 will be described later.

The rotating section 3 has the rotor 31 and is supported so as to be able to rotate with respect to the shaft 10. The rotor 31 is located radially inside the armature 22 and radially faces the armature 22. A bearing mechanism 100 is interposed between the shaft 10 and the rotor 31. Further, a magnet 311 is retained in the rotor 31. At the time of driving of the motor 11, circumferential torque is generated by the action of magnetic flux between the magnet 311 and the armature 22. As a result, the rotor 31 rotates with respect to the armature 22. The rotating section 3 is fixed to the impeller cup 121, as described above. That is, the impeller 12 rotates along with the rotating section 3.

As shown in Figs. 4 and 6, a first space 61 is present above the base section 21 and below the flow guide plate 4. Further, a second space 62 is present above the flow guide plate 4 and further on the inside in the radial direction than an outer peripheral end of the flow guide plate 4. As described above, the base section 21 has the first openings 51 on the outside in the radial direction of the circuit board disposition portion 211. The first openings 51 make the first space 61 communicate with the external space below the base section 21. The flow guide plate 4 has a second opening 52 on the inside in the radial direction of a flat plate portion 41. The second opening 52 makes the first space 61 and the second space 62 communicate with each other. A third opening 53 is provided between an end portion on the inside in the radial direction of the annular portion 252 of the motor frame 25 and the rotating section 3. The third opening 53 makes the second space 62 and the external space of the motor 11 communicate with each other.

### <3-3. With respect to Flow Guide Plate>

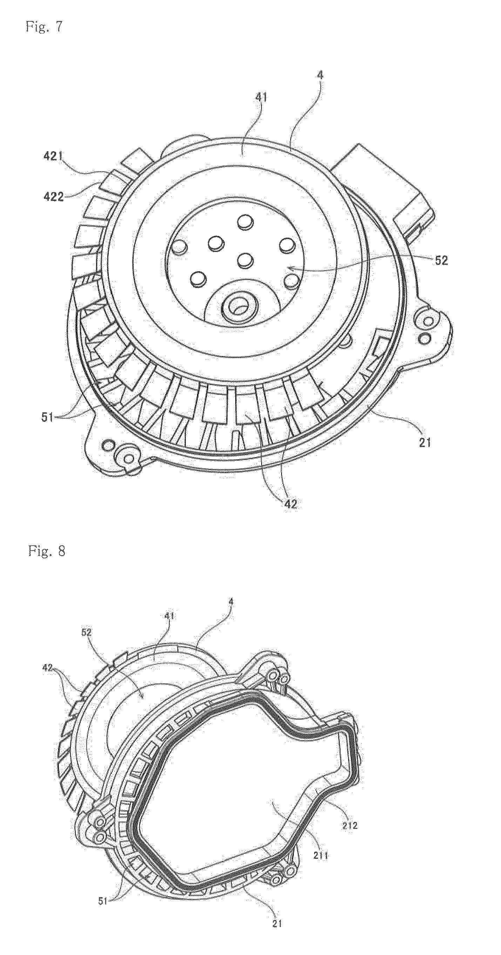

Next, the flow guide plate 4 will be described in detail. Fig. 7 is a perspective view from the top side of the flow guide plate 4 and the base section 21. Fig. 8 is a perspective view from the bottom side of the flow guide plate 4 and the base section 21. The flow guide plate 4 in this embodiment is made of resin. In addition, the flow guide plate 4 may be made of an elastomer.

As shown in Figs. 6 to 8, the flow guide plate 4 has the flat plate portion 41 and a plurality of inclined portions 42. The flat plate portion 41 extends substantially parallel to the upper surface of the base section 21 and annularly. The second opening 52 is disposed on the inside in the radial direction of the flat plate portion 41. The second opening 52 axially penetrates the flow guide plate 4. The flat plate portion 41 axially overlaps a portion of the circuit board disposition portion 211.

The plurality of inclined portions 42 is disposed in the circumferential direction on the outside in the radial direction of the flat plate portion 41. Further, the plurality of inclined portions 42 is located above the first openings 51. Each of the plurality of inclined portions 42 is disposed between two fins 210 adjacent to each other in the circumferential direction. In this way, the circumferential movement of the flow guide plate 4 is suppressed.

Each inclined portion 42 in this embodiment has one side end portion 421 on the inside thereof in the radial direction and the other side end portion 422 on the outside thereof in the radial direction. One side end portion 421 is an end portion on the flat plate portion 41 side and is connected to an end portion on the outside in the radial direction of the flat plate portion 41. The other side end portion 422 is away in the radial direction from the flat plate portion 41. Further, one side end portion 421 is located further to the upper side in the axial direction than the other side end portion 422. A portion of each inclined portion 42 and each first opening 51 axially overlap each other. In this way, an air current entering the motor 11 from the first opening 51 is guided by the inclined portion 42, thereby smoothly heading for the upper surface of the circuit board disposition portion 211. In addition, in this embodiment, a portion of each inclined portion 42 axially overlaps each first opening 51. However, the entirety of the inclined portion 42 may be located above the first opening 51. That is, the flow guide plate 4 has the inclined portions 42 which are connected to the flat plate portion 41, at least a portion of each inclined portion 42 is located above each first opening 51, each inclined portion 42 has one side end portion 421 which is an end portion on the flat plate portion 41 side, and the other side end portion 422 which is away in the radial direction from the flat plate portion 41, and one side end portion 421 is located further to the upper side in the axial direction than the other side end portion 422.

Further, as shown in Fig. 6, the flow guide plate 4 further has a contact portion 43. The contact portion 43 is disposed on the upper surface side of the flow guide plate 4 and is in contact with the armature 22. In this way, when an air current entering the motor 11 from the first openings 51 hits against the flow guide plate 4, upward rising of the flow guide plate 4 can be suppressed.

### <3-4. With respect to Pathway of Air Current>

Subsequently, a pathway of an air current will be described. The pathway of an air current is shown by a dashed line in Figs. 3, 4, and 6.

If the motor 11 is driven, the impeller 12 rotates along with the rotating section 3. Then, as shown in Fig. 3, the outer blades 122 of the impeller 12 create an air current toward the lower side from the upper side. The axial air current created by the outer blades 122 turns to and enters the lower surface side of the motor 11. The air current or air on the lower surface side of the motor 11 flows in the first opining 51.

As described above, the fins 210 are disposed on both sides in the circumferential direction of the first opening 51. In this way, heat conducted to the fins 210 is heat-exchanged with the air current flowed in the first opening 51. On the other hand, heat generated from the electronic component 231 is conducted to the circuit board disposition portion 211 and some of the heat is then conducted to the fins 210. Therefore, some of the heat generated from the electronic component 231 is dissipated from the fins 210 through the air current.

As shown in Figs. 4 and 6, the air current entering the motor 11 from the first openings 51 advances inward in the radial direction along the lower surfaces of the inclined portions 42 and the flat plate portion 41 of the flow guide plate 4 in the first space 61 and reaches the second opening 52. As described above, the inclined portion 42 is inclined upward toward one side end portion 421 from the other side end portion 422. In this way, the air current entering from the first openings 51 is guided by the inclined portions 42, thereby smoothly heading for the gap between the flat plate portion 41 and the circuit board disposition portion 211.

As described above, the air current entering the motor 11 from the first openings 51 reaches the second opening 52 along the lower surface of the flow guide plate 4. Further, the flat plate portion 41 of the flow guide plate 4 and the upper surface of the circuit board disposition portion 211 are substantially parallel to each other. That is, the air current entering the first space 61 of the motor 11 from the first openings 51 heads for the second opening 52 along the upper surface of the circuit board disposition portion 211. Here, the first openings 51 are located further to the outside in the radial direction than the second opening 52. In this way, since the air current entering the first space 61 from the first openings 51 is guided inward in the radial direction, directly upward flowing of the air current is suppressed.

Heat generated from the electronic component 231 is conducted from the lower surface to the upper surface of the circuit board disposition portion 211. As described above, the protrusion portions 213 are disposed on the upper surface of the circuit board disposition portion 211. Therefore, heat is efficiently dissipated from the upper surface of the circuit board disposition portion 211 and the surfaces of the protrusion portions 213 by the air current heading for the second opening 52 along the upper surface of the circuit board disposition portion 211.

Next, the air current advances to the second space 62 through the second opening 52, expands outward in the radial direction along a lower end portion of the rotor 31, and heads for the upper side through a gap in the armature 22 in the circumferential direction or the gap between the armature 22 and the rotor 31. Subsequently, the air current is discharged from the third opening 53 to the outside of the motor 11.

As shown in Fig. 6, the fan 1 has the third space 63 between the motor 11 and the impeller cup 121. The third opening 53 makes the second space 62 and the third space 63 communicate with each other. That is, the air current discharged from the third opening 53 of the motor 11 flows in the third space 63. The impeller cup 121 is disposed above the motor 11. The fan 1 has a plurality of blades extending outward in the radial direction from the impeller cup 121. The impeller cup 121 accommodates at least a portion of the motor 11 inside. The fan 1 has the third space 63 between the motor 11 and the impeller cup 121. The third opening 53 makes the second space 62 and the third space 63 communicate with each other. The third space 63 communicates with the external space through the gap between an end portion of the impeller cup 121 and the motor 11.

The gap between the lower end portion of the tubular portion 72 of the impeller cup 121 and the motor 11 becomes a fourth opening 54. The third space 63 communicates with the external space through the fourth opening 54. In this way, the air current entering the third space 63 from the third opening 53 is discharged to the outside of the fan 1 through the fourth opening 54.

As described above, the inner blade 123 extends inward in the radial direction from the tubular portion 72 of the impeller cup 121 in the third space 63. The inner blade 123 is rotated along with the rotating section 3 by the driving of the motor 11, thereby creating an air current in the third space 63. In this way, an air current which is discharged from the third space 63 through the fourth opening 54 to the outside is enhanced. As a result, an air current flowing from the inside of the motor 11 through the third opening 53 to the third space 63 is promoted. For this reason, the amount of air entering the inside of the motor from the first openings 51 of the motor increases, and thus cooling efficiency is improved.

Due to the above configuration, when an air current is created between the first openings 51 and the third opening 53 in the inside of the motor 11 according to this embodiment, the air current passing through the inside of the motor 11 advances in contact with not only the fins 210, but also the upper surface of the circuit board disposition portion 211. Therefore, a heat dissipation area of the base section 21 is increased by disposing the flow guide plate 4 in the inside of the motor 11. In this way, cooling efficiency is improved.

### <4. Modified Examples>

The exemplary embodiments of the invention have been described above. However, the invention is not limited to the above embodiments.

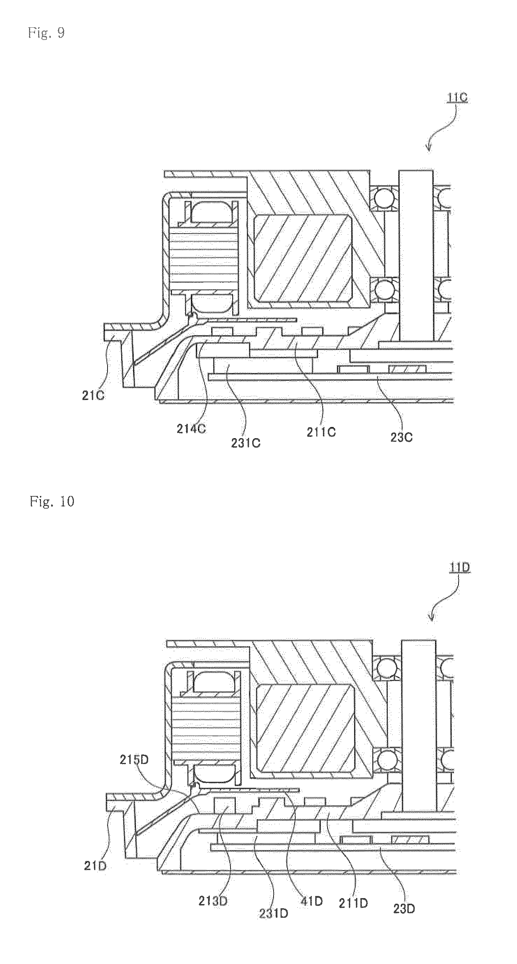

Fig. 9 is a partial cross-sectional view of a motor 11C according to a modified example. In the example shown in FIG. 9, a circuit board disposition portion 211C of a base section 21C has a thin portion 214C. The thin portion 214C is thinner than another portion of the circuit board disposition portion 211C. That is, a portion of the circuit board disposition portion 211C is thinner than another portion of the circuit board disposition portion 211C. In the thin portion 214C, compared to another portion of the circuit board disposition portion 211C, heat is easily transferred from the lower surface to the upper surface. Then, an electronic component 231C in which it is particularly necessary to dissipate heat due to the large amount of heat generation or the like, of electronic components 231C mounted on a circuit board 23C, is disposed on the lower surface of the thin portion 214C. That is, the electronic component 231C in which the necessity of heat dissipation is high is disposed on the thin portion 214C. In this way, the heat dissipation efficiency of the entirety of the circuit board 23C is further increased.

Fig. 10 is a partial cross-sectional view of a motor 11D according to another modified example. In the example shown in FIG. 10, a base section 21D has a stepped portion 215D at a portion of a circuit board disposition portion 215D. The upper surface of the stepped portion 215D is depressed more than another portion of the circuit board disposition portion 211D. That is, the base section 21D has the stepped portion 211D in which a portion of the upper surface of the circuit board disposition portion 211D is depressed more than another portion. An electronic component 231D in which it is particularly necessary to dissipate heat due to the large amount of heat generation or the like, of electronic components 231D mounted on a circuit board 23D, is disposed on the lower surface of the stepped portion 215D. That is, the electronic component 231D in which the necessity of heat dissipation is high is disposed on the stepped portion 215D. In this way, the electronic component 231D in which the necessity of heat dissipation is high and the lower surface of the stepped portion 215D can be brought into close contact with each other, and thus heat dissipation efficiency is further increased.

The base section 21D has a protrusion portion 213D on the upper surface of the circuit board disposition portion 211D. Similar to the third embodiment, the surface area of the upper surface of the base section 21D becomes wide due to the protrusion portion 213D. In particular, due to the formation of the stepped portion 215D, on the upper surface of the stepped portion 215D, the axial length of the protrusion portion 213D is long, compared to another portion of the circuit board disposition portion 211D. That is, a surface area becomes wider. In this way, heat dissipation efficiency from the upper surface of the stepped portion 215D is further increased. That is, heat generated from the electronic component 231D disposed on the lower surface of the stepped portion 215D is efficiently dissipated. In this way, the heat dissipation efficiency of the entirety of the circuit board 23 is further increased.

Further, by forming the stepped portion 215D, it is possible to set the axial length of the protrusion portion 213D provided on the upper surface of the stepped portion 215D to be long while making an upper end of the protrusion portion 213D provided on the upper surface of the stepped portion 215D and an upper end of another protrusion portion 213D be located at the same height. That is, it is possible to increase the heat dissipation efficiency of the electronic component 231D without changing the axial length of the motor. In addition, the stepped portion 215D may have a plurality of step portions and may also be a concave portion.

Further, a flat plate portion 41D may have inclination which is directed downward in the axial direction as it goes inward in the radial direction, and an end portion thereof on the inside in the radial direction may be disposed above the stepped portion 215D. In this way, it becomes easy for an air current to head for particularly the stepped portion 215D.

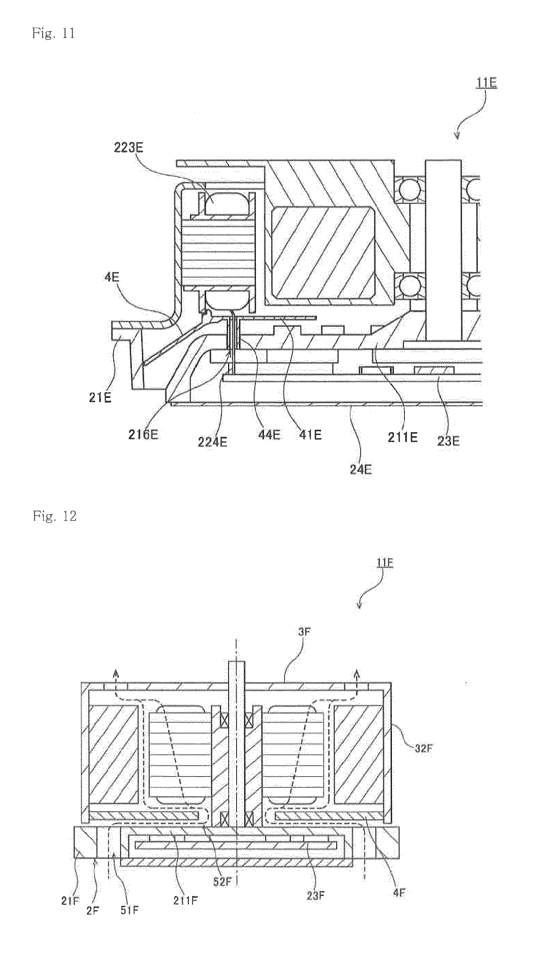

Fig. 11 is a partial cross-sectional view of a motor 11E according to another modified example. In the example shown in FIG. 11, a base section 21E has a base penetration hole 216E. The base penetration hole 216E axially penetrates a circuit board disposition portion 211E. On the other hand, a flow guide plate 4E is formed of an insulating material. Further, the flow guide plate 4E further has an insulation portion 44E. The insulation portion 44E protrudes in a tubular shape toward the lower side from a flat plate portion 41E. Then, the insulation portion 44E is disposed inside the base penetration hole 216E. Further, a conducting wire 224E extends downward from a coil 223E of an armature 22E. The conducting wire 224E is drawn below the base section 21E through the insulation portion 44E and connected to a circuit board 23E.

In the example shown in Fig. 11, since the insulation portion 44E is disposed inside the base penetration hole 216E, the conducting wire 224E and the base section 21E do not come into direct contact with each other. Then, since the flow guide plate 4E is formed of an insulating material, conduction between the conducting wire 224E and the base section 21E is prevented. That is, the flow guide plate 4E performs insulation between the conducting wire 224E and the base section 21E. In this way, it is not necessary to prepare another component or perform insulation processing on the base section 21E for insulation between the conducting wire 224E and the base section 21E. In addition, a seal member such as a silicone adhesive may be interposed between the inner peripheral surface configuring the base penetration hole 216E of the base section 21E and the outer side surface of the insulation portion 44E. In this way, the sealing performance of the space between the base section 21E and a board cover 24E is increased.

Fig. 12 is a cross-sectional view of a motor 11F according to another modified example. The motor 11F shown in FIG. 12 is an outer rotor type motor, similar to the motor 11B according to the second embodiment. In the example shown in Fig. 12, a rotating section 3F has a flow guide plate 4F. An end portion on the outside in the radial direction of the flow guide plate 4F is fixed to a rotor frame 32F of the rotating section 3F. Even if the rotating section 3F has the flow guide plate 4F in this manner, an air current entering a first opening 51F from the outside of the motor 11F is guided by the flow guide plate 4F and advances along the upper surface of a circuit board disposition portion 211F of a base section 21F. Therefore, also in the example shown in Fig. 12, heat generated from a circuit board 23F can be efficiently dissipated from the upper surface of the circuit board disposition portion 211F.

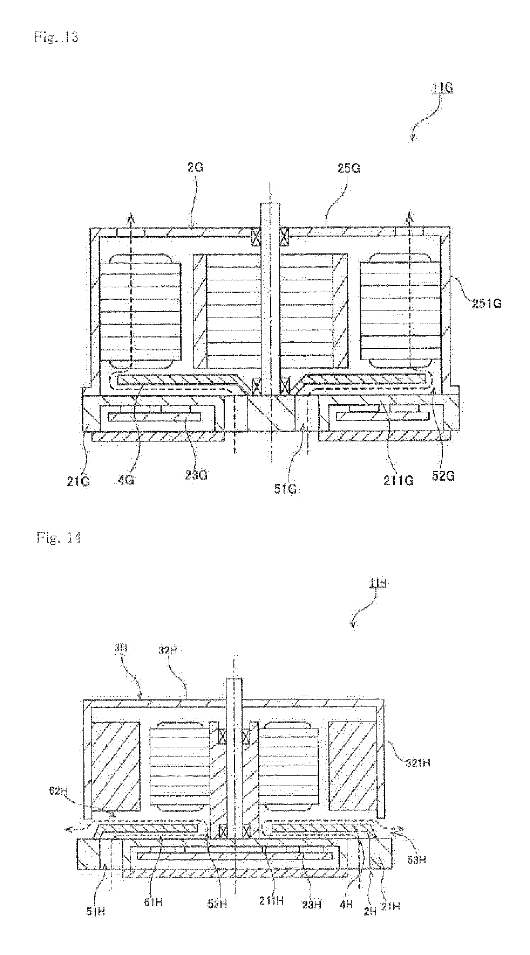

Fig. 13 is a cross-sectional view of a motor 11G according to another modified example. The motor 11G is an inner rotor type motor, similar to the motor 11A according to the first embodiment. In the example shown in Fig. 13, a first opening 51G is disposed in the inside in the radial direction of a circuit board disposition portion 211G. The circuit board disposition portion 211G is annularly disposed radially outside the first opening 51G. An end portion on the inside in the radial direction of a flow guide plate 4G is fixed to a base section 21G. Then, the gap between an end portion on the outside in the radial direction of the flow guide plate 4G and a cylindrical portion 251G of a motor frame 25G becomes a second opening 52G. That is, the first opening 51G is located further to the inside in the radial direction than the second opening 52G.

An air current entering the first opening 51G from the outside of the motor 11G is guided by the flow guide plate 4G and advances outward in the radial direction along the upper surface of the circuit board disposition portion 211G of the base section 21G. In this manner, also in the example shown in Fig. 13, heat generated from a circuit board 23G can be efficiently dissipated from the upper surface of the circuit board disposition portion 211G.

Fig. 14 is a cross-sectional view of a motor 11H according to another modified example. The motor 11H is an outer rotor type motor, similar to the motor 11B according to the second embodiment. In the example shown in Fig. 14, the gap between a base section 21H and a lower end portion of a rotor frame 32H becomes a third opening 53H. An air current entering a first space 61H from a first opening 51H flows in a second space 62H through a second opening 52H. Thereafter, an air current entering the second space 62H from the second opening 52H is discharged from the third opening 53H.

Further, an air current entering the first opening 51H from the outside of the motor 11H is guided by a flow guide plate 4H and advances along the upper surface of a circuit board disposition portion 211H of the base section 21H. Therefore, also in the example shown in Fig. 14, heat generated from a circuit board 23H can be efficiently dissipated from the upper surface of the circuit board disposition portion 211H.

Further, in the embodiments described above, the flow guide plate is made of resin. However, the flow guide plate may be formed of another material. For example, the flow guide plate may be a steel sheet subjected to press working, or the like. Further, the flow guide plate may be made of an elastomer. In this way, leakage of an air current is suppressed at a contact place between the flow guide plate and another member such as the base section. As a result, the flow guide effect by the flow guide plate is further increased,

Further, the shape of the detail of each member may be different from the shape shown in each drawing of this application. Further, the respective elements appearing in the above embodiments or modified examples may be appropriately combined with each other within a scope in which contradiction does not occur.

As described above, the flow guide plates 4, 4A, 4B, 4F, and 4H respectively have the second openings 52, 52A, 52B, 52F, and 52H on the inside thereof in the radial direction. Then, the stationary sections 2, 2A, 2B, 2F, and 2H are respectively disposed radially inside the second openings 52, 52A, 52B, 52F, and 52H. Further, the gap between the end portion on the outside in the radial direction of the flow guide plate 4G and the cylindrical portion 251G of the motor frame 25G, that is, a stationary section 2G becomes the second opening 52G. That is, the second openings 52, 52A, 52B, 52F, 52G, and 52H are respectively formed by the flow guide plates 4, 4A, 4B, 4F, 4G, and 4H and the stationary sections 2, 2A, 2B, 2F, 2G, and 2H.

In Fig. 1, the third opening 53A is provided in the upper plate portion 254A of the motor frame 25A. Further, in Fig. 2, the third opening 53B is provided in the upper plate portion 322B of the rotor frame 32B. Furthermore, in Fig. 6, the third opening 53 is provided between the end portion on the inside in the radial direction of the annular portion 252 of the motor frame 25 and the rotating section 3. In addition, in Fig. 14, the gap between the base section 21H and the lower end portion of the rotor frame 32H becomes the third opening 53H. Therefore, the third openings 53, 53A, 53B, and 53H are respectively provided in the upper surface of the stationary section 2A or the rotating section 3B or between the stationary sections 2 and 2H and the rotating sections 3 and 3H.

### [Industrial Applicability]

The invention can be used for a motor and a fan.

## Claims

1. A motor that is used for a fan having an impeller cup and a blade extending outward in a radial direction from the impeller cup, comprising:
a stationary section; and
a rotating section that rotates around a vertically extending central axis along with the impeller cup,
wherein the stationary section includes
a base section that extends in the radial direction below the rotating section and has a circuit board disposition portion,
an armature that is located above the base section,
a circuit board that is disposed on a lower surface of the circuit board disposition portion and electrically connected to the armature, and
a board cover that is disposed below the circuit board disposition portion and covers the circuit board,
the rotating section includes
a rotor that is disposed radially inside the armature and generates torque between itself and the armature,
the stationary section or the rotating section has a flow guide plate having an annular shape and extending in the radial direction,
at least a portion of the flow guide plate is located below the armature and the rotor,
the flow guide plate has a flat plate portion axially overlapping at least a portion of the circuit board disposition portion,
a first space is present above the base section and below the flow guide plate,
a second is present above the flow guide plate and further on the inside in the radial direction than an outer peripheral end of the flow guide plate,
the base section has a first opening making the first space communicate with an external space below or radially outside the base section,
a second opening that is formed by the flow guided plate and the stationary section makes the first space and the second space communicate with each other, and
a third opening making the second space and the external space communicate with each other is provided in an upper surface of the stationary section or the rotating section or between the stationary section and the rotating section.

2. The motor according to Claim 1, wherein the motor is used for a fan having an impeller cup and a blade extending outward in a radial direction from the impeller cup and includes:
a stationary section; and
a rotating section that rotates around a vertically extending central axis along with the impeller cup,
the stationary section includes
a base section that extends in the radial direction below the rotating section and has a circuit board disposition portion,
an armature that is located above the base section,
a circuit board that is disposed on a lower surface of the circuit board disposition portion and electrically connected to the armature,
a board cover that is disposed below the circuit board disposition portion and covers the circuit board, and
a motor frame having a cylindrical portion having a cylindrical shape,
the rotating section includes
a rotor that is disposed radially inside the armature and generates torque between itself and the armature,
the stationary section or the rotating section has a flow guide plate having an annular shape and extending in the radial direction,
the cylindrical portion accommodates at least a portion of the stationary section and at least a portion of the rotating section inside in the radial direction,
at least a portion of the flow guide plate is located below the armature and the rotor,
the flow guide plate has a flat plate portion axially overlapping at least a portion of the circuit board disposition portion,
a first space is present above the base section and below the flow guide plate,
a second is present above the flow guide plate and further on the inside in the radial direction than an outer peripheral end of the flow guide plate,
the base section has a first opening making the first space communicate with an external space below or radially outside the base section,
the flow guide plate has a second opening making the first space and the second space communicate with each other, and
a third opening making the second space and the external space communicate with each other is provided in the motor frame or between the motor frame and the rotating section.

3. The motor according to Claim 1, wherein the motor is used for a fan having an impeller cup and a blade extending outward in a radial direction from the impeller cup and includes:
a stationary section; and
a rotating section that rotates around a vertically extending central axis along with the impeller cup,
the stationary section includes
a base section that extends in the radial direction below the rotating section and has a circuit board disposition portion,
an armature that is located above the base section,
a circuit board that is disposed on a lower surface of the circuit board disposition portion and electrically connected to the armature, and
a board cover that is disposed below the circuit board disposition portion and covers the circuit board,
the rotating section includes
a rotor that is disposed radially outside the armature and generates torque between itself and the armature, and
a rotor frame surrounding the armature from the outside in the radial direction,
the stationary section or the rotating section has a flow guide plate having an annular shape and extending in the radial direction,
at least a portion of the flow guide plate is located below the armature and the rotor,
the flow guide plate has a flat plate portion axially overlapping at least a portion of the circuit board disposition portion,
a first space is present above the base section and below the flow guide plate,
a second space is present above the flow guide plate and further on the inside in the radial direction than an outer peripheral end of the flow guide plate,
the base section has a first opening making the first space communicate with an external space below or radially outside the base section,
the flow guide plate has a second opening making the first space and the second space communicate with each other, and
a third opening making the second space and the external space communicate with each other is provided in the rotor frame or between the rotor frame and the stationary section.

4. The motor according to any one of Claims 1 to 3, further comprising: a seal material hermetically sealing the base section and an end portion of the board cover.

5. The motor according to any one of Claims 1 to 4, wherein the flow guide plate has the second opening on the inside in the radial direction of the flat plate portion, and the first opening is located further to the outside in the radial direction than the second opening.

6. The motor according to any one of Claims 1 to 5, wherein the flow guide plate further has an inclined portion that is connected to the flat plate portion,
at least a portion of the inclined portion is located above the first opening,
the inclined portion has one side end portion that is an end portion on the flat plate portion side, and the other side end portion which is away in the radial direction from the flat plate portion, and
one side end portion is located further to the upper side in an axial direction than the other side end portion.

7. The motor according to any one of Claims 1 to 6, wherein at least an upper surface of the circuit board disposition portion is made of a metal material.

8. The motor according to any one of Claims 1 to 7, wherein a portion of the circuit board disposition portion is thinner than another portion of the circuit board disposition portion.

9. The motor according to any one of Claims 1 to 8, wherein the base section has a protrusion portion on an upper surface of the circuit board disposition portion.

10. The motor according to Claim 9, wherein the base section has a stepped portion in which a portion of the upper surface of the circuit board disposition portion is depressed more than another portion.

11. The motor according to any one of Claims 1 to 10, wherein the stationary section has the flow guide plate.

12. The motor according to Claim 11, wherein the base section has a base penetration hole axially penetrating the circuit board disposition portion,
the flow guide plate is formed of an insulating material,
the flow guide plate has an insulation portion having a tubular shape and protruding downward,
the insulation portion is disposed inside the base penetration hole, and
a conducting wire extending from the armature is drawn below the base section through the insulation portion and connected to the circuit board.

13. The motor according to Claim 11 or 12, wherein at least a portion of the upper surface of the flow guide plate is in contact with the armature.

14. The motor according to any one of Claims 1 to 13, wherein the flow guide plate is made of an elastomer.

15. A fan comprising:
the motor according to any one of Claims 1 to 14;
an impeller cup that is disposed above the motor; and
a plurality of blades extending outward in a radial direction from the impeller cup,
wherein the impeller cup accommodates at least a portion of the motor inside,
the fan has a third space between the motor and the impeller cup,
the third opening makes the second space and the third space communicate with each other, and
the third space communicates with an external space through a gap between an end portion of the impeller cup and the motor.

16. The fan according to Claim 15, wherein the impeller further has an inner blade extending inward in the radial direction from the impeller cup.
